# EUROPÄISCHE PATENTSCHRIFT

(11) **EP 2 035 473 B1**
(45) Veröffentlichungstag und Bekanntmachung des Hinweises auf die Patenterteilung: **27.02.2019**
(21) Anmeldenummer: 07788288.4
(22) Anmeldetag: 07.08.2007
(51) Int. Cl.: C08F 283/12, C08F 290/06, C08F 290/14, C08F 2/06, C08F 2/00, C08L 51/08, C09D 151/08, C08G 77/28

(54) **HOCHFESTSTOFFHALTIGE LÖSUNGEN VON SILIKONORGANOCOPOLYMEREN MIT HOHEM SILIKONGEHALT UND HOHEM FESTSTOFFGEHALT UND VERFAHREN ZU DEREN HERSTELLUNG UND DEREN VERWENDUNG**
SOLUTIONS CONTAINING SOLIDS OF SILICONORGANOCOPOLYMERS WITH HIGHT SILICON CONTENT AND HIGH SOLID CONENT AND METHOD FOR THE PRODUCTION AND THE USE THEREOF
SOLUTIONS À HAUTE TENEUR EN MATIÈRES SOLIDES DE COPOLYMÈRES D'ORGANOSILICONES AVEC UNE HAUTE TENEUR EN SILICONE ET UNE HAUTE TENEUR EN MATIÈRES SOLIDES ET PROCÉDÉS POUR LEUR PRÉPARATION ET LEUR UTILISATION

(30) Priorität: 09.08.2006 DE 102006037272
(43) Veröffentlichungstag der Anmeldung: 18.03.2009
(73) Patentinhaber: Wacker Chemie AG, 81737 München (DE)
(72) Erfinder: HASHEMZADEH, Abdulmajid, 84508 Burgkirchen (DE)
(74) Vertreter: Schuderer, Michael
(86) Internationale Anmeldenummer: PCT/EP2007/058188
(87) Internationale Veröffentlichungsnummer: WO 2008/017672

(56) Entgegenhaltungen:
- EP-A- 0 352 339
- EP-A- 0 937 998
- EP-A1- 0 810 243
- WO-A-03/085035
- DE-A1- 4 240 108
- DE-A1- 4 330 279
- US-B1- 6 534 590

## Beschreibung

Die Erfindung betrifft hochsilikonhaltige Silikonorganocopolymere in Form von deren hochfeststoffhaltiger Lösung sowie deren Herstellung durch radikalische Lösungspolymerisation und Verwendung.

Polysiloxane und Silikonorganocopolymere finden in diversen Anwendungsgebieten Einsatz, z.B. als Zusätze in Farben, Lacken, Klebstoffen, Kosmetika, in der Textilveredelung, Kunststoffverarbeitung oder bei der Papier- und Textilherstellung.

Silikonorganocopolymere werden beispielsweise durch radikalische Polymerisation in organischen Lösemitteln oder in wässriger Dispersion durch Emulsions- oder Suspensionspolymerisation erhalten. Bei der Herstellung von Silikonorganocopolymeren aus olefinhaltigen Monomeren und Silikonen kommt es auf Grund der schlechten Verträglichkeit der Edukte insbesondere bei einem Silikonanteil von über 25 Gew.-% während der Polymerisation zu Problemen durch Phasenseparation oder Gelierung, was zur Trübung der Silikonorganocopolymere führt. Diese Probleme treten insbesondere dann auf, wenn der Feststoffgehalt bei der Polymerisation erhöht wird.

Die radikalische Lösungspolymerisation wird beispielsweise in DE 4240108 A1 bei Verwendung von Toluol, Xylol und Butylacetat als Lösungsmittel beschrieben. Polysiloxan wird dabei im Zuge der Polymerisation radikalisch polymerisierbarer Monomere in eine Polymermatrix eingebettet. Die Vernetzung der Polymermatrix und der Polysiloxane erfolgt erst nach Zugabe einer weiteren Komponente bei der Applikation. Bis zur Vernetzung kann es zu Gelierung und Phasenseparation der Silikonorganocopolymerkomponenten kommen.

In WO 03/085035 A1 wird ein Verfahren zur radikalischen Lösungspolymerisation beschrieben, bei dem Lösemittelgemische aus mindestens zwei nichtwässerigen Lösungsmitteln verwendet werden. Dabei werden auch Lösungen von hochsilikonhaltigen Silikonorganocopolymeren mit hohem Feststoffgehalt beschrieben. Erreicht wurde dies durch Einsatz ganz bestimmter Lösungsmittelgemische. Allerdings weisen sämtliche konkret offenbarten Polymerzusammensetzungen mit einem Feststoffgehalt über 30 % Phasentrennung, Gelierung bzw. Vernetzung auf. Des Weiteren ist die Verwendung von Lösungsmittelgemischen aus verfahrenstechnischen Gründen nachteilig, da die Lösungsmittelgemische destillativ aufwändig getrennt werden müssen, um die einzelnen Lösungsmittelkomponenten einer Wiederverwendung zuführen zu können.

Vor diesem Hintergrund bestand die Aufgabe, hochtransparente hochsilikonhaltige Silikonorganocopolymere in Form von deren hochfeststoffhaltiger Lösung bereitzustellen und ein ökonomisch effizientes Verfahren zu deren Herstellung.

Gegenstand der Erfindung sind hochsilikonhaltige Silikonorganocopolymere mit einem Silikongehalt von ≥ 25 Gew.-% in Form von deren hochfeststoffhaltiger Lösung in einem Lösungsmittel bestehend aus i-Propanol mit einem Feststoffgehalt von größer 30 Gew.-% erhältlich mittels radikalisch initiierter Lösungspolymerisation von
a) 20 bis 75 Gew.-% eines oder mehrerer ethylenisch ungesättigter Monomere, und
b) 25 bis 80 Gew.-% von einem oder mehreren Silikonen der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000,
wobei 85 bis 100 Gew.-% der Silikone b) ein bis zwei polymerisierbare Gruppen enthalten, wobei Silikone b) mit nur einer polymerisierbaren Gruppe nur im Gemisch mit Silikonen b) mit zwei polymerisierbaren Gruppen und in einem Gewichtsverhältnis ≤ 50/50 eingesetzt werden,
wobei die Angaben in Gew.-% für die Komponenten a) bis b) jeweils auf das Gesamtgewicht der eingesetzten Monomere bezogen sind und sich auf 100 Gew.-% aufaddieren,
dadurch gekennzeichnet, dass die Polymerisation im Lösungsmittel bestehend aus i-Propanol erfolgt, worin Silikon b) eine Löslichkeit von weniger als 5 Gew.-% unter Normalbedingungen (23/50) nach DIN50014 aufweist.

Das Lösungsmittel zeichnet sich dadurch aus, dass dieses Nicht-Löser für Silikon b) und Löser für Monomer a) ist. Silikon b) ist darin mit weniger als 5 Gew.-% und Monomer a) mit mehr als 5 Gew.-% unter Normalbedingungen (23/50) nach DIN50014 löslich.

Bevorzugt werden Lösungen hochsilikonhaltiger Silikonorganocopolymere mit einem Festgehalt von 30 bis 90 %, besonders bevorzugt mit einem Festgehalt von 40 bis 90 % und ganz besonders bevorzugt mit einem Festgehalt von 40 bis 75 % erhalten.

Bevorzugte ethylenisch ungesättigte Monomere a) sind Vinylester von unverzweigten oder verzweigten Alkylcarbonsäuren mit 1 bis 15 C-Atomen oder Ester der Acrylsäure oder (Meth)acrylsäure und unverzweigten oder verzweigten Alkoholen mit 1 bis 15 C-Atomen.

Bevorzugte Ester der Acrylsäure oder (Meth)acrylsäure als ungesättigte Monomere a) sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.

Bevorzugte Vinylester als Monomere a) sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 11 C-Atomen, beispielsweise VeoVa9^{R} oder VeoVa10^{R} (Handelsnamen der Firma Resolution, Vinylester von α-verzweigten Monocarbonsäuren mit 9 oder 10 C-Atomen). Besonders bevorzugt sind Vinylacetat, Vinyllaurat und VeoVa. Geeignete Comonomere sind Ethylen, Propylen, 1,3-Butadien und Isopren. Bevorzugt ist Ethylen.

Gegebenenfalls können noch 0.1 bis 20 Gew.-%, bezogen auf das Gesamtgewicht der eingesetzten Monomere, Hilfsmonomere copolymerisiert werden. Beispiele für Hilfsmonomere sind Acryl- und Methacrylsäure und Monomere aus der Gruppe der Ester der Acrylsäure oder Methacrylsäure, wie Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Weitere Hilfsmonomere sind auch ethylenisch ungesättigte Monocarbonsäuren, wie Crotonsäure, und Dicarbonsäuren, wie Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME),N-Methylolmethacrylamid, N-Methylolallylcarbamat, Alkylether wie der Isobutoxyether oder Ester des N-Methylolmethacrylamids und des N-Methylolallylcarbamats.

In der allgemeinen Formel R¹ₐR₃₋ₐSiO(SiR₂O)ₙSiR₃₋ₐR¹ₐ sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, isoPentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbare Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, Acryloxymethyl- und 3-Acryloxypropyl-Gruppe.

Bevorzugte Silikone b) sind lineare oder verzweigte Polydialkylsiloxane mit einer Kettenlänge von 10 bis 1000, bevorzugt 20 bis 500 SiR₂O-Einheiten. Vorzugsweise beträgt der Anteil an Silikon b) 25 bis 80 Gew.-%, bezogen auf das Gesamtgewicht der Einheiten a), b) und gegebenenfalls c).

Besonders bevorzugt werden α,ω-Divinyl-Polydimethylsiloxane, α,ω-Di-(3-acryloxypropyl)-Polydimethylsiloxane, α,ω-Di-(3-methacryloxypropyl)-Polydimethylsiloxane. Bei den nur einfach mit ungesättigten Gruppen substituierten Silikonen sind α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane bevorzugt. Bei den monofunktionellen Polydimethylsiloxanen befindet sich am anderen Kettenende ein Alkyl- oder Alkoxyrest, beispielsweise ein Methyl- oder Butylrest.

Bevorzugt sind auch Gemische von linearen oder verzweigten Divinyl-Polydimethylsiloxanen mit linearen oder verzweigten Monovinyl-Polydimethylsiloxanen und/oder nicht funktionalisierten Polydimethylsiloxanen (letztere besitzen keine polymerisierbare Gruppe). Die Vinylgruppen befinden sich vorzugsweise am Kettenende. Beispiele für solche Gemische sind Silikone der lösemittelfreien Dehesive®-6-Reihe (verzweigt) oder Dehesive®-9-Reihe (unverzweigt) der Wacker Chemie AG. Bei den binären oder ternären Gemischen beträgt der Anteil der unfunktionellen Polydialkylsiloxane bis zu 15 Gew.-%, vorzugsweise bis zu 5 Gew.-%; der Anteil der monofunktionellen Polydialkylsiloxane bis zu 50 Gew.-%; und der Anteil der difunktionellen Polydialkylsiloxane mindestens 50 Gew.-%, vorzugsweise mindestens 60 Gew.-%, jeweils bezogen auf das Gesamtgewicht des Silikonanteils b).

Am meisten bevorzugt als Silikon b) werden α,ω-Divinyl-Polydimethylsiloxane, oder ein binäres Gemisch von α,ω-Divinyl-Polydimethylsiloxanen mit α-Monovinyl-Polydimethylsiloxanen, oder ein ternäres Gemisch von α,ω-Divinyl-Polydimethylsiloxanen, α-Monovinyl-Polydimethylsiloxanen mit nicht funktionalisiertem Polydimethysiloxan.

Neben diesen Monomeren können zusätzlich noch hydrolysierbare Silanmonomere c) copolymerisiert werden. Geeignete hydrolysierbare Siliciumverbindungen sind beispielsweise ethylenisch ungesättigte und damit copolymerisierbare Siliciumverbindungen der allgemeinen Formel R³SiR²₀₋₂(OR⁴)_{1-3'} wobei R² die Bedeutung C₁₋bis C₃-Alkylrest, C₁- bis C₃-Alkoxyrest oder Halogen (z.B. Cl oder Br) hat, R die Bedeutung CH₂=CR³-(CH₂)₀₋₁ oder CH₂=CRCO₂(CH₂)₁₋₃ hat, R⁴ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁴ gegebenenfalls durch eine Ethergruppe unterbrochen sein kann, und R für H oder CH₃ steht.

Bevorzugt sind γ-Acryl- bzw. γ-Methacryloxypropyltri(alkoxy)silane, α-Methacryloxymethyltri(alkoxy)silane, γ-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen-, Ethoxyethylen-, Methoxypropylenglykolether- bzw. Ethoxypropylenglykolether-Reste eingesetzt werden können. Beispiele für geeignete Siliciumverbindungen sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Silane.

Als Silane werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische, insbesondere Gemische von 2 oder mehreren Silanen aus der Gruppe umfassend von 3-Methacryloxypropyltrimethoxysilan oder Methacryloxymethyltrimethoxysilan mit Vinyltrimethoxysilan und Vinyltriethoxysilan.

Am meisten bevorzugt werden Silikonorganocopolymere, welche als Monomereinheiten a) Vinylacetat, oder Vinylacetat und Ethylen, oder Vinylacetat und VeoVa9 und gegebenenfalls Ethylen, oder Vinylacetat und VeoVa10 und gegebenenfalls Ethylen, oder Vinylacetat, Vinyllaurat und gegebenenfalls Ethylen enthalten; und welche als Silikon b) ein binäres Gemisch von α,ω-Divinyl-Polydimethylsiloxan mit α-Monovinyl-Polydimethylsiloxan oder ein ternäres Gemisch von α,ω-Divinyl-Polydimethylsiloxan, α-Monovinyl-Polydimethylsiloxan mit nicht funktionalisiertem Polydimethysiloxan enthalten.

Besonders bevorzugt sind Silikonorganocopolymere hergestellt aus 25-70 Gew.-% α,ω-Divinyl-Polydimethylsiloxan, 75-30 Gew.-% Vinylacetat und gegebenenfalls 5-20 Gew.-% von Monomeren ausgewählt aus der Gruppe umfassend VeoVa9, VeoVa10, Vinyllaurat und Crotonsäure, wobei sich die Gewichtsanteile der einzelnen Monomere auf 100 Gew.-% aufaddieren.

Ein weiterer Gegenstand der Erfindung ist ein Verfahren zur Herstellung von hochsilikonhaltigen Silikonorganocopolymeren mit einem Silikongehalt von ≥ 25 Gew.-% in Form von deren hochfeststoffhaltiger Lösung in einem Lösungsmittel bestehend aus i-Propanol mit einem Feststoffgehalt von größer 30 Gew.-% erhältlich mittels radikalisch initiierter Lösungspolymerisation von
a) 20 bis 75 Gew.-% eines oder mehrerer ethylenisch ungesättigter Monomere, und
b) 25 bis 80 Gew.-% von einem oder mehreren Silikonen der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000,
wobei 85 bis 100 Gew.-% der Silikone b) ein bis zwei polymerisierbare Gruppen enthalten, wobei Silikone b) mit nur einer polymerisierbaren Gruppe nur im Gemisch mit Silikonen b) mit zwei polymerisierbaren Gruppen und in einem Gewichtsverhältnis ≤ 50/50 eingesetzt werden,
wobei die Angaben in Gew.-% für die Komponenten a) bis b) jeweils auf das Gesamtgewicht der eingesetzten Monomere bezogen sind und sich auf 100 Gew.-% aufaddieren,
dadurch gekennzeichnet, dass die Polymerisation im Lösungsmittel bestehend aus i-Propanol erfolgt, worin Silikon b) eine Löslichkeit von weniger als 5 Gew.-% unter Normalbedingungen (23/50) nach DIN50014 aufweist.

Die Reaktionstemperatur beträgt 20°C bis 100°C, vorzugsweise 40°C bis 80°C. Im Allgemeinen wird bei Normaldruck unter Rückfluss polymerisiert. Bei der Copolymerisation von bei Raumtemperatur gasförmigen Monomeren wie Ethylen wird unter Druck, im Allgemeinen zwischen 1 und 100 bar, gearbeitet. Im Allgemeinen wird die Polymerisation bis zu einem Festgehalt von 30 bis 90 %, bevorzugt bis zu einem Festgehalt von 40 bis 90 % und besonders bevorzugt bis zu einem Festgehalt von 40 bis 75 % durchgeführt.

Geeignete Radikalinitiatoren sind öllösliche Initiatoren, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan und Di-(4-t-Butylcyclohexyl)peroxydicarbonat. Geeignet sind auch Azoinitiatoren wie Azobisisobutyronitril. Die Initiatoren werden im allgemeinen in einer Menge von 0.005 bis 3.0 Gew.-%, bevorzugt 0.1 bis 1.5 Gew.-%, bezogen auf das Gesamtmonomer, eingesetzt.

Die Einstellung des Molekulargewichts und des Polymerisationsgrades ist dem Fachmann bekannt. Diese kann z.B. durch Zugabe von Regler, durch das Verhältnis i-Propanol zu Monomeren, durch Variation der Initiatorkonzentration, durch Dosiervariation von Monomeren und durch Variation der Temperatur erfolgen. Regler oder Kettentransfermittel sind zum Beispiel Acetaldehyd oder merkaptogruppenhaltige Verbindungen, wie Dodecylmerkaptan oder merkaptogruppenhaltige Silikone.

Die Polymerisation kann unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Vorzugsweise wird so vorgegangen, dass 3 bis 40 Gew.-% eines Gemisches aus den Monomeren a), b) und gegebenenfalls c) in den gewünschten Mengenverhältnissen vorgelegt werden und der Rest der Monomere a), b) und gegebenenfalls c) als Gemisch zudosiert wird. Weiter ist bevorzugt, den Initiator teilweise, vorzugsweise zu 3 bis 50 Gew.-%, vorzulegen, und den Rest zuzudosieren. Besonders bevorzugt werden die gesamten Monomere b) und ein Teil von a) und gegebenenfalls von c) vorgelegt und der Rest zudosiert.

Als Batch-Verfahren werden alle Monomere, Lösungsmittel und ein Teil des Initiators vorgelegt und der Initiatorrest wird zudosiert oder stoßweise zugegeben.

Nach Abschluss der Polymerisation kann zur Restmonomerentfernung in Anwendung bekannter Methoden nachpolymerisiert werden. Flüchtige Restmonomere und weitere flüchtige Bestandteile können auch mittels Destillation oder Stripverfahren, vorzugsweise unter reduziertem Druck, entfernt werden.

Die Silikonorganocopolymere können in Form einer Lösung oder nach Entfernung des Lösungsmittels bzw. Ausfällen des Harzanteils als Festharz verwendet werden. Im letzteren Fall geht man im Allgemeinen so vor, dass das Harz aufgeschmolzen und anschließend zu Granulat verarbeitet wird.

Die Silikonorganocopolymere eignen sich als Trenn- und Beschichtungsmittel, beispielsweise zur Herstellung von abhäsiven (nicht klebenden) Überzügen im Release-Coating. Sie sind auch geeignet zur Beschichtung von Textilien, Papieren, Folien und Metallen, beispielsweise als Schutzbeschichtung oder als Antifouling- oder Antigraffiti-Beschichtung. Ein weiteres Anwendungsgebiet ist der Bautenschutz, insbesondere zur Herstellung von witterungsbeständigen Beschichtungen oder Dichtstoffen. Sie sind auch als Modifizierungs- und Hydrophobierungsmittel geeignet und als Additiv für Kosmetika, wie Haarsprays oder Haarfixiermittel.

Die Silikonorganocopolymere werden vorzugsweise zur Hydrophobierung oder zur Herstellung von glatten Oberflächen von natürlichen oder synthetischen Stoffen in Kosmetik, Kunstoffe, Composit, Lacke und Farben verwendet. Die Silikonorganocopolymere können sowohl als Schmelze oder als Lösung in organischen Lösungsmitteln, bevorzugt in Toluol, Benzin, Ethylacetat oder Xylol, oder in Reaktivverdünner verwendet werden. Reaktivverdünner sind niedermolekulare Stoffe, die mindestens eine oder mehrere funktionelle Gruppen enthalten, die durch eine oder mehrere Aktivierungen - gleichzeitig oder hintereinander - zur Polymerisation bzw. Vernetzung führen. Als Reaktivverdünner sind z.B. Monomere wie Acrylate, Methacrylate oder Styrol zu erwähnen, die in Anwesenheit von entsprechenden Initiatoren thermisch oder unter Bestrahlung (UV-Vernetzung) polymerisieren. Bei Elektronenstrahlhärtung findet die Polymerisation ohne Initiator statt. Als polyfunktionelle Monomere sind Trimethylolpropantriacrylat, Pentaerythrit-triacrylat, ethoxyliertes bzw. propoxyliertes Trimethylolpropantriacrylat zu erwähnen.

Als weitere Reaktivverdünner sind auch Verbindungen mit gleichen oder ungleichen funktionellen Gruppen wie z.B. Glycerinpropoxylat-triglycidylether, Glycidylmethacrylat, 3-Methacryloxypropyl)trimethoxysilan, (3-Isocyanatopropyl)tri-methoxysilan, (3-Glycidoxypropyl)tri-ethoxysilan, 3-(Triethoxysilyl)propylbernsteinsäureanhydrid zu erwähnen.

Das Auftragen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Mit der erfindungsgemäßen Vorgehensweise werden Silikonorganocopolymere zugänglich, welche sich durch hohe Transparenz (glasklare Produkte) und vernachlässigbare Migration des Silikonanteils auszeichnen.

### Beispiele:

### PDMS-Gemisch:

Gemisch aus drei Polydimethylsiloxanen mit einer Kettenlänge von jeweils etwa 100 Dimethylsiloxan-Einheiten, welches 5 Gew.-% nicht funktionalisiertes Polydimethylsiloxan, 20 Gew.-% α-Monovinyl-Polydimethylsiloxan und 75 Gew.-% α,ω-Divinyl-Polydimethylsiloxan enthält.

### Beispiel 1

In einem 21-Glasrührtopf mit Ankerrührer, Rückflusskühler und Dosiereinrichtungen wurden 407.0 g i-Propanol, 274.0 g PDMS-Gemisch, 547,0 g Vinylacetat, 91,0 g Vinyllaurat und 1.6 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurde mit der Initiatordosierung (70 g i-Propanol und 4.1 g PPV) begonnen (Dosierzeit 2 Stunden). Nach Ende der Initiatordosierungen wurde noch 2 Stunden bei 75°C nachpolymerisiert. Es wurde eine klare Polymerlösung mit einem Feststoffgehalt von 65 Gew.-% und einem Silikonanteil im Polymer von 30 Gew.-% erhalten. Unter Vakuum und erhöhter Temperatur wurde i-Propanol abdestilliert. Die Viskosität (Höppler, 10 %-ige Lösung in Ethylacetat) lag bei 3.17 mPas. Der trockene Film aus Ethylacetatlösung (Schichtdicke 70 Mikrometer) war klar.

### Beispiel 2

Es wurde analog zum Beispiel 1 vorgegangen, aber anstatt Vinyllaurat VeoVa10 verwendet.

Die Viskosität (Höppler, 10 %-ige Lösung in Ethylacetat) lag bei 3.8 mPas. Der trockene Film aus Ethylacetatlösung (Schichtdicke 70 Mikrometer) war klar.

### Beispiel 3

In einem 21-Glasrührtopf mit Ankerrührer, Rückflusskühler und Dosiereinrichtungen wurden 407.0 g i-Propanol, 228.0 g PDMS-Gemisch, 152,0 g Vinylacetat und 1.6 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurde 532 g Vinylacetat und Initiatorlösung (70 g i-Propanol und 4.1 g PPV) zudosiert. Das Vinylacetat wurde innerhalb von 90 Minuten und die Initiatorlösung innerhalb von 120 Minuten zudosiert. Nach Ende der Initiatordosierung wurde noch 2 Stunden bei 75°C nachpolymerisiert. Es wurde eine klare Polymerlösung mit einem Feststoffgehalt von 65 Gew.-% und einem Silikonanteil im Polymer von 25 Gew.-% erhalten. Unter Vakuum und erhöhter Temperatur wurde i-Propanol abdestilliert. Die Viskosität (Höppler, 10 %-ige Lösung in Ethylacetat) lag bei 4,2 mPas. Der trockene Film aus Ethylacetatlösung (Schichtdicke 70 Mikrometer) war klar.

### Vergleichsbeispiel 1:

Es wurde analog zu Beispiel 1 vorgegangen, aber anstatt i-Propanol Methanol verwendet. Während der Polymerisation wurde eine starke Viskositätszunahme beobachtet. Nach ca. 2-stündiger Polymerisation gelierte die Polymerlösung.

### Vergleichsbeispiel 2:

Es wurde analog zu Beispiel 1 vorgegangen, aber anstatt i-Propanol Ethylacetat verwendet. Hier wurde auch eine Gelierung der Polymerlösung festgestellt.

### Vergleichsbeispiel 3:

Es wurde analog zu Beispiel 1 vorgegangen, aber anstatt i-Propanol Ethanol verwendet. Hier wurde auch eine Gelierung der Polymerlösung festgestellt.

### Vergleichsbeispiel 4:

Es wurde analog zu Vergleichsbeispiel 3 vorgegangen, aber die Ethanolkonzentration wurde deutlich erhöht. Nach der Polymerisation wurde eine trübe Polymerlösung mit einem Feststoffgehalt von 40 Gew.-% erhalten.

## Patentansprüche

1. Hochsilikonhaltige Silikonorganocopolymere mit einem Silikongehalt von ≥ 25 Gew.-% in Form von deren hochfeststoffhaltiger Lösung in einem Lösungsmittel bestehend aus i-Propanol mit einem Feststoffgehalt von größer 30 Gew.-% erhältlich mittels radikalisch initiierter Lösungspolymerisation von
a) 20 bis 75 Gew.-% eines oder mehrerer ethylenisch ungesättigter Monomere, und
b) 25 bis 80 Gew.-% von einem oder mehreren Silikonen der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000, wobei 85 bis 100 Gew.-% der Silikone b) ein bis zwei polymerisierbare Gruppen enthalten, wobei Silikone b) mit nur einer polymerisierbaren Gruppe nur im Gemisch mit Silikonen b) mit zwei polymerisierbaren Gruppen und in einem Gewichtsverhältnis < 50/50 eingesetzt werden,
wobei die Angaben in Gew.-% für die Komponenten a) bis b) jeweils auf das Gesamtgewicht der eingesetzten Monomere bezogen sind und sich auf 100 Gew.-% aufaddieren,
**dadurch gekennzeichnet, dass** die Polymerisation im Lösungsmittel bestehend aus i-Propanol erfolgt, worin Silikon b) eine Löslichkeit von weniger als 5 Gew.-% unter Normalbedingungen (23/50) nach DIN50014 aufweist.

2. Hochsilikonhaltige Silikonorganocopolymere nach Anspruch 1, **dadurch gekennzeichnet, dass** Lösungen von hochsilikonhaltigen Silikonorganocopolymeren mit einem Feststoffgehalt von 30 bis 90 % erhalten werden.

3. Hochsilikonhaltige Silikonorganocopolymere nach Anspruch 1 bis 2, **dadurch gekennzeichnet, dass** als Silikon b) ein oder mehrere aus der Gruppe umfassend α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane eingesetzt werden.

4. Hochsilikonhaltige Silikonorganocopolymere nach Anspruch 1 bis 3, **dadurch gekennzeichnet, dass** als Silikon b) α,ω-Divinyl-Polydimethylsiloxane, oder ein binäres Gemisch von α,ω-Divinyl-Polydimethylsiloxanen mit α-Monovinyl-Polydimethylsiloxanen, oder ein ternäres Gemisch von α,ω-Divinyl-Polydimethylsiloxanen, α-Monovinyl-Polydimethylsiloxanen mit nicht funktionalisiertem Polydimethysiloxan eingesetzt werden.

5. Hochsilikonhaltige Silikonorganocopolymere nach Anspruch 1 bis 4, **dadurch gekennzeichnet, dass** als Monomere a) Vinylester von unverzweigten oder verzweigten Alkylcarbonsäuren mit 1 bis 15 C-Atomen oder Ester der Acrylsäure oder (Meth)acrylsäure und unverzweigten oder verzweigten Alkoholen mit 1 bis 15 C-Atomen eingesetzt werden.

6. Hochsilikonhaltige Silikonorganocopolymere nach Anspruch 1 bis 5, **dadurch gekennzeichnet, dass** als Monomere ein oder mehrere aus der Gruppe umfassend a) Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat eingesetzt werden.

7. Hochsilikonhaltige Silikonorganocopolymere nach Anspruch 1 bis 5, **dadurch gekennzeichnet, dass** als Monomere a) Vinylacetat, oder Vinylacetat und Ethylen, oder Vinylacetat und Vinylester von α-verzweigten Monocarbonsäuren mit 5 bis 11 C-Atomen, oder Vinylacetat und VeoVa9 und gegebenenfalls Ethylen, oder Vinylacetat und VeoVa10 und gegebenenfalls Ethylen, oder Vinylacetat und Vinyllaurat und gegebenenfalls Ethylen, oder Ethylen und Vinylester von α-verzweigten Monocarbonsäuren mit 5 bis 11 C-Atomen eingesetzt werden.

8. Verfahren zur Herstellung von hochsilikonhaltigen Silikonorganocopolymeren mit einem Silikongehalt von ≥ 25 Gew.-% in Form von deren hochfeststoffhaltiger Lösung in einem Lösungsmittel bestehend aus i-Propanol mit einem Feststoffgehalt von größer 30 Gew.-% erhältlich mittels radikalisch initiierter Lösungspolymerisation von
a) 20 bis 75 Gew.-% eines oder mehrerer ethylenisch ungesättigter Monomere, und
b) 25 bis 80 Gew.-% von einem oder mehreren Silikonen der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000, wobei 85 bis 100 Gew.-% der Silikone b) ein bis zwei polymerisierbare Gruppen enthalten, wobei Silikone b) mit nur einer polymerisierbaren Gruppe nur im Gemisch mit Silikonen b) mit zwei polymerisierbaren Gruppen und in einem Gewichtsverhältnis < 50/50 eingesetzt werden,
wobei die Angaben in Gew.-% für die Komponenten a) bis b) jeweils auf das Gesamtgewicht der eingesetzten Monomere bezogen sind und sich auf 100 Gew.-% aufaddieren,
**dadurch gekennzeichnet, dass** die Polymerisation im Lösungsmittel bestehend aus i-Propanol erfolgt, worin Silikon b) eine Löslichkeit von weniger als 5 Gew.-% unter Normalbedingungen (23/50) nach DIN50014 aufweist.

9. Verfahren zur Herstellung von hochsilikonhaltigen Silikonorganocopolymeren nach Anspruch 8, **dadurch gekennzeichnet, dass** alle Monomere, Lösungsmittel und ein Teil des Initiators vorgelegt und der Initiatorrest zudosiert oder stoßweise zugegeben wird.

10. Verfahren zur Herstellung von hochsilikonhaltigen Silikonorganocopolymeren nach Anspruch 8, **dadurch gekennzeichnet, dass** 3 bis 40 Gew.-% eines Gemisches aus den Monomeren a) und b) in den gewünschten Mengenverhältnissen vorgelegt werden und der Rest der Monomere a) und b) als Gemisch zudosiert wird.

11. Verwendung von hochsilikonhaltigen Silikonorganocopolymeren aus Anspruch 1 bis 7 als Trenn- und Beschichtungsmittel zur Herstellung von abhäsiven Überzügen.

12. Verwendung von hochsilikonhaltigen Silikonorganocopolymeren aus Anspruch 1 bis 7 als Beschichtungsmittel zur Beschichtung von Textil, Papier, Folien und Metallen.

13. Verwendung von hochsilikonhaltigen Silikonorganocopolymeren aus Anspruch 1 bis 7 im Bautenschutz zur Herstellung von witterungsbeständigen Beschichtungen oder Dichtstoffen.

14. Verwendung von hochsilikonhaltigen Silikonorganocopolymeren aus Anspruch 1 bis 7 als Modifizierungs- und Hydrophobierungsmittel.

15. Verwendung von hochsilikonhaltigen Silikonorganocopolymeren aus Anspruch 1 bis 7 als Additiv für Kosmetika, insbesondere Haarsprays und Haarfixiermittel.

## Claims

1. High silicone content organosilicone copolymers having a silicone content of ≥ 25% by weight, in the form of their high-solids solution in a solvent consisting of isopropanol having a solids content of greater than 30% by weight, obtainable by means of free-radically initiated solution polymerization of
a) 20% to 75% by weight of one or more ethylenically unsaturated monomers, and
b) 25% to 80% by weight of one or more silicones of the general formula R¹ₐR₃₋ₐSiO(SiR₂O)ₙSiR₃₋ₐR¹ₐ, where each R is alike or different and is a monovalent, optionally substituted, alkyl radical or alkoxy radical having in each case 1 to 18 C atoms, R¹ is a polymerizable group, a is 0 or 1, and n = 10 to 1000,
85% to 100% by weight of the silicones b) contain one to two polymerizable groups, and silicones b) having only one polymerizable group are used only in a mixture with silicones b) having two polymerizable groups, and in a weight ratio < 50/50,
the amounts in % by weight for components a) to b) being based in each case on the total weight of the monomers used, adding up to 100% by weight, **characterized in that** the polymerization takes place in the solvent consisting of isopropanol in which silicone b) has a solubility of less than 5% by weight under standard conditions (23/50) according to DIN50014.

2. High silicone content organosilicone copolymers according to Claim 1, **characterized in that** solutions of high silicone content organosilicone copolymers having a solids content of 30% to 90% are obtained.

3. High silicone content organosilicone copolymers according to Claim 1 to 2, **characterized in that** one or more silicones from the group encompassing α,ω-divinyl-polydimethylsiloxanes, α,ω-di(3-acryloyloxypropyl)-polydimethylsiloxanes, α,ω-di-(3-methacryloyloxypropyl)-polydimethylsiloxanes, α-monovinyl-polydimethylsiloxanes, α-mono-(3-acryloyloxypropyl)-polydimethylsiloxanes, α-mono-(acryloyloxymethyl)-polydimethylsiloxanes, α-mono-(3-methacryoyloxypropyl)-polydimethylsiloxanes are used as silicone b).

4. High silicone content organosilicone copolymers according to Claim 1 to 3, **characterized in that** α,ω-divinyl-polydimethylsiloxanes, or a binary mixture of α,ω-divinyl-polydimethylsiloxanes with α-monovinyl-polydimethylsiloxanes, or a ternary mixture of α,ω-divinyl-polydimethylsiloxanes, α-monovinyl-polydimethylsiloxanes with nonfunctionalized polydimethylsiloxane are used as silicone b).

5. High silicone content organosilicone copolymers according to Claim 1 to 4, **characterized in that** vinyl esters of unbranched or branched alkylcarboxylic acids having 1 to 15 C atoms or esters of acrylic acid or (meth) acrylic acid and unbranched or branched alcohols having 1 to 15 C atoms are used as monomers a).

6. High silicone content organosilicone copolymers according to Claim 1 to 5, **characterized in that** one or more monomers from the group encompassing a) methyl acrylate, methyl methacrylate, ethyl acrylate, ethyl methacrylate, propyl acrylate, propyl methacrylate, n-, iso-, and tert-butyl acrylate, n-, iso-, and tert-butyl methacrylate, 2-ethylhexyl acrylate, norbornyl acrylate are used as monomers.

7. High silicone content organosilicone copolymers according to Claim 1 to 5, **characterized in that** vinyl acetate, or vinyl acetate and ethylene, or vinyl acetate and vinyl esters of α-branched monocarboxylic acids having 5 to 11 C atoms, or vinyl acetate and VeoVa9 and, if desired, ethylene, or vinyl acetate and VeoVa10 and, if desired, ethylene, or vinyl acetate and vinyl laurate and, if desired, ethylene, or ethylene and vinyl esters of α-branched monocarboxylic acids having 5 to 11 C atoms, are used as monomers a).

8. Process for preparing high silicone content organosilicone copolymers having a silicone content of ≥ 25% by weight, in the form of their high-solids solution in a solvent consisting of isopropanol having a solids content of greater than 30% by weight, obtainable by means of free-radically initiated solution polymerization of
a) 20% to 75% by weight of one or more ethylenically unsaturated monomers, and
b) 25% to 80% by weight of one or more silicones of the general formula R¹aR₃₋ₐSiO(SiR₂O)ₙSiR₃₋ₐR¹ₐ, where each R is alike or different and is a monovalent, optionally substituted, alkyl radical or alkoxy radical having in each case 1 to 18 C atoms, R¹ is a polymerizable group, a is 0 or 1, and n = 10 to 1000,
85% to 100% by weight of the silicones b) contain one to two polymerizable groups, and silicones b) having only one polymerizable group are used only in a mixture with silicones b) having two polymerizable groups, and in a weight ratio < 50/50,
the amounts in % by weight for components a) to b) being based in each case on the total weight of the monomers used, adding up to 100% by weight, **characterized in that** the polymerization takes place in the solvent consisting of isopropanol in which silicone b) has a solubility of less than 5% by weight under standard conditions.

9. Process for preparing high silicone content organosilicone copolymers according to Claim 8, **characterized in that** all the monomers, solvent(s), and a portion of the initiator are included in the initial charge and the remainder of the initiator is added in metered form or in portions.

10. Process for preparing high silicone content organosilicone copolymers according to Claim 8, **characterized in that** 3% to 40% by weight of a mixture of the monomers a) and b) in the desired proportions is included in the initial charge and the remainder of the monomers a) and b) as a mixture is metered in.

11. Use of high silicone content organosilicone copolymers from Claim 1 to 7 as release agents and coating materials for producing abhesive coatings.

12. Use of high silicone content organosilicone copolymers from Claim 1 to 7 as coating materials for coating textile, paper, films, and metals.

13. Use of high silicone content organosilicone copolymers from Claim 1 to 7 in architectural preservation for producing weathering-resistant coatings or sealants.

14. Use of high silicone content organosilicone copolymers from Claim 1 to 7 as modifiers and hydrophobicizing agents.

15. Use of high silicone content organosilicone copolymers from Claim 1 to 7 as additives for cosmetics, especially hairsprays and hairsetting agents.

## Revendications

1. Copolymères de silicones organiques à teneur élevée en silicones, ayant un teneur en silicones ≥ 25 % en poids, sous la forme de leur solution à teneur élevée en solides dans un solvant constitué par de l'i-propanol, ayant une teneur en solides supérieure à 30 % en poids, pouvant être obtenus par polymérisation en solution initiée radicalairement de
a) 20 à 75 % en poids d'un ou de plusieurs monomères éthyléniquement insaturés, et
b) 25 à 80 % en poids d'une ou de plusieurs silicones de formule générale R¹ₐR₃₋ₐSiO(SiR₂O)ₙSiR₃₋ₐR¹ₐ, les R étant identiques ou différents, et signifiant un radical alkyle ou un radical alcoxy monovalent, éventuellement substitué, contenant à chaque fois 1 à 18 atomes C, R¹ signifiant un groupe polymérisable, a valant 0 ou 1, et n = 10 à 1 000, 85 à 100 % en poids des silicones b) contenant un à deux groupes polymérisables, des silicones b) ne contenant qu'un seul groupe polymérisable n'étant utilisées qu'en mélange avec des silicones b) contenant deux groupes polymérisables, et en un rapport en poids < 50/50,
les données en % en poids pour les composants a) à b) se rapportant à chaque fois au poids total des monomères utilisés, et leur somme étant de 100 % en poids, **caractérisés en ce que** la polymérisation a lieu dans le solvant constitué par de l'i-propanol, dans lequel la silicone b) présente une solubilité inférieure à 5 % en poids en conditions normales (23/50) selon DIN 50014.

2. Copolymères de silicones organiques à teneur élevée en silicones selon la revendication 1, **caractérisés en ce que** des solutions de copolymères de silicones organiques à teneur élevée en silicones ayant une teneur en solides de 30 à 90 % sont obtenues.

3. Copolymères de silicones organiques à teneur élevée en silicones selon les revendications 1 à 2, **caractérisés en ce qu'**en tant que silicone b), une ou plusieurs du groupe comprenant les α,ω-divinyl-polydiméthylsiloxanes, les α,ω-di-(3-acryloxypropyl)-polydiméthylsiloxanes, les α,ω-di-(3-méthacryloxypropyl)-polydiméthylsiloxanes, les a-monovinyl-polydiméthylsiloxanes, les α-mono-(3-acryloxypropyl)-polydiméthylsiloxanes, les α-mono-(acryloxyméthyl)-polydiméthylsiloxanes, les α-mono-(3-méthacryloxypropyl)-polydiméthylsiloxanes sont utilisées.

4. Copolymères de silicones organiques à teneur élevée en silicones selon les revendications 1 à 3, **caractérisés en ce qu'**en tant que silicone b), des α,ω-divinyl-polydiméthylsiloxanes, ou un mélange binaire d'α,ω-divinyl-polydiméthylsiloxanes avec des α-monovinyl-polydiméthylsiloxanes, ou un mélange ternaire d'α,ω-divinyl-polydiméthylsiloxanes, d'a-monovinyl-polydiméthylsiloxanes avec du polydiméthylsiloxane non fonctionnalisé sont utilisés.

5. Copolymères de silicones organiques à teneur élevée en silicones selon les revendications 1 à 4, **caractérisés en ce qu'**en tant que monomères a), des esters de vinyle d'acides alkylcarboxyliques non ramifiés ou ramifiés de 1 à 15 atomes C ou des esters de l'acide acrylique ou de l'acide (méth)acrylique et d'alcools non ramifiés ou ramifiés de 1 à 15 atomes C sont utilisés.

6. Copolymères de silicones organiques à teneur élevée en silicones selon les revendications 1 à 5, **caractérisés en ce qu'**en tant que monomères, un ou plusieurs du groupe comprenant a) l'acrylate de méthyle, le méthacrylate de méthyle, l'acrylate d'éthyle, le méthacrylate d'éthyle, l'acrylate de propyle, le méthacrylate de propyle, l'acrylate de n-, iso- et t-butyle, le méthacrylate de n-, iso- et t-butyle, l'acrylate de 2-éthylhexyle, l'acrylate de norbornyle sont utilisés.

7. Copolymères de silicones organiques à teneur élevée en silicones selon les revendications 1 à 5, **caractérisés en ce qu'**en tant que monomères a), de l'acétate de vinyle, ou de l'acétate de vinyle et de l'éthylène, ou de l'acétate de vinyle et des esters vinyliques d'acides monocarboxyliques α-ramifiés contenant 5 à 11 atomes C, ou de l'acétate de vinyle et VeoVa9 et éventuellement de l'éthylène, ou de l'acétate de vinyle et VeoVa10 et éventuellement de l'éthylène, ou de l'acétate de vinyle et du laurate de vinyle et éventuellement de l'éthylène, ou de l'éthylène et des esters vinyliques d'acides monocarboxyliques α-ramifiés contenant 5 à 11 atomes C sont utilisés.

8. Procédé de fabrication de copolymères de silicones organiques à teneur élevée en silicones ayant une teneur en silicones ≥ 25 % en poids sous la forme de leur solution à teneur élevée en solides dans un solvant constitué par de l'i-propanol, ayant une teneur en solides supérieure à 30 % en poids, pouvant être obtenus par polymérisation en solution initiée radicalairement de
a) 20 à 75 % en poids d'un ou de plusieurs monomères éthyléniquement insaturés, et
b) 25 à 80 % en poids d'une ou de plusieurs silicones de formule générale R¹ₐR₃₋ₐSiO(SiR₂O)ₙSiR₃₋ₐR¹ₐ, les R étant identiques ou différents, et signifiant un radical alkyle ou un radical alcoxy monovalent, éventuellement substitué, contenant à chaque fois 1 à 18 atomes C, R¹ signifiant un groupe polymérisable, a valant 0 ou 1, et n = 10 à 1 000, 85 à 100 % en poids des silicones b) contenant un à deux groupes polymérisables, des silicones b) ne contenant qu'un seul groupe polymérisable n'étant utilisées qu'en mélange avec des silicones b) contenant deux groupes polymérisables, et en un rapport en poids < 50/50,
les données en % en poids pour les composants a) à b) se rapportant à chaque fois au poids total des monomères utilisés, et leur somme étant de 100 % en poids, **caractérisé en ce que** la polymérisation a lieu dans le solvant constitué par de l'i-propanol, dans lequel la silicone b) présente une solubilité inférieure à 5 % en poids en conditions normales (23/50) selon DIN 50014.

9. Procédé de fabrication de copolymères de silicones organiques à teneur élevée en silicones selon la revendication 8, **caractérisé en ce que** tous les monomères, le solvant et une partie de l'initiateur sont chargés initialement, et le reste de l'initiateur est ajouté de manière dosée ou ajouté par à-coup.

10. Procédé de fabrication de copolymères de silicones organiques à teneur élevée en silicones selon la revendication 8, **caractérisé en ce que** 3 à 40 % en poids d'un mélange des monomères a) et b) est chargé initialement en les rapports de quantité souhaités, et le reste des monomères a) et b) est ajouté de manière dosée sous la forme d'un mélange.

11. Utilisation de copolymères de silicones organiques à teneur élevée en silicones selon les revendications 1 à 7 en tant qu'agents de séparation et de revêtement pour la fabrication de revêtements abhésifs.

12. Utilisation de copolymères de silicones organiques à teneur élevée en silicone selon les revendications 1 à 7 en tant qu'agents de revêtement pour le revêtement de textile, de papier, de films et de métaux.

13. Utilisation de copolymères de silicones organiques à teneur élevée en silicones selon les revendications 1 à 7 dans la protection de bâtiments pour la fabrication de revêtements résistants aux intempéries ou de matériaux d'étanchéité.

14. Utilisation de copolymères de silicones organiques à teneur élevée en silicones selon les revendications 1 à 7 en tant qu'agents de modification et d'hydrophobation.

15. Utilisation de copolymères de silicones organiques à teneur élevée en silicones selon les revendications 1 à 7 en tant qu'additifs pour produits cosmétiques, notamment pulvérisations pour les cheveux et produits de fixation des cheveux.
